(19) Europäisches Patentamt
European Patent Office
Office européen des brevets

(11) **EP 1 049 580 B1**

(12) **EUROPÄISCHE PATENTSCHRIFT**

(45) Veröffentlichungstag und Bekanntmachung des Hinweises auf die Patenterteilung:
**07.11.2001 Patentblatt 2001/45**

(21) Anmeldenummer: **99904705.3**

(22) Anmeldetag: **15.01.1999**

(51) Int Cl.7: **B41C 1/045**, H04N 1/407

(86) Internationale Anmeldenummer:
**PCT/DE99/00052**

(87) Internationale Veröffentlichungsnummer:
**WO 99/36265 (22.07.1999 Gazette 1999/29)**

(54) **VERFAHREN ZUR KALIBRIERUNG EINES GRAVIERVERSTÄRKERS**

METHOD FOR CALIBRATING AN ENGRAVING AMPLIFIER

PROCEDE D'ETALONNAGE D'UN AMPLIFICATEUR DE GRAVURE

(84) Benannte Vertragsstaaten:
**DE ES FR GB IT**

(30) Priorität: **16.01.1998 DE 19801472**

(43) Veröffentlichungstag der Anmeldung:
**08.11.2000 Patentblatt 2000/45**

(73) Patentinhaber: **Heidelberger Druckmaschinen Aktiengesellschaft**
**69115 Heidelberg (DE)**

(72) Erfinder: **WEIDLICH, Ernst-Rudolf, Gottfried**
**D-24159 Kiel (DE)**

(56) Entgegenhaltungen:
EP-A- 0 595 324          WO-A-96/26837
DE-A- 19 717 990        US-A- 3 893 166
US-A- 5 438 422

**Beschreibung**

Die Erfindung bezieht sich auf das Gebiet der elektronischen Reproduktionstechnik und betrifft ein Verfahren zur Kalibrierung eines Gravierverstärkers in einer elektronischen Graviermaschine zur Gravur von Druckzylindern für den Tiefdruck.

In einer elektronischen Graviermaschine bewegt sich ein Gravierorgan mit einem Gravierstichel als Schneidwerkzeug in axialer Richtung an einem rotierenden Druckzylinder entlang. Der von einem Graviersignal gesteuerte Gravierstichel schneidet eine Folge von in einem Gravurraster angeordneten Näpfchen in die Mantelfläche des Druckzylinders. Das Graviersignal wird in einem Gravierverstärker durch Überlagerung von Bildsignalwerten mit einem periodischen Vibrationssignal gebildet. Während das Vibrationssignal eine oszillierende Hubbewegung des Gravierstichels zur Erzeugung des Gravurrasters bewirkt, bestimmen die Bildsignalwerte, welche die zu reproduzierenden Tonwerte zwischen "Licht" und "Tiefe" repräsentieren, die geometrischen Abmessungen der gravierten Näpfchen.

Damit die auf dem Druckzylinder gravierten Näpfchen die durch die Bildsignalwerte vorgegebenen Solltonwerte haben, wird eine Kalibrierung des Gravierverstärkers vorgenommen. Dazu werden bei einer Probegravur Probenäpfchen für vorgegebene Solltonwerte graviert, beispielsweise für die Solltonwerte "Licht", "Tiefe" und "Mittelton". Nach der Probegravur werden die geometrischen Istabmessungen der gravierten Probenäpfchen ausgemessen und mit den entsprechenden Sollabmessungen verglichen. Aus dem Vergleich der geometrischen Abmessungen werden Einstellwerte ermittelt, mit denen das Graviersignal derart kalibriert wird, daß die geometrischen Abmessungen der bei der Gravur tatsächlich erzeugten Näpfchen den für eine tonwertrichtige Gravur erforderlichen geometrischen Abmessungen entsprechen.

Bei der herkömmlichen Kalibrierung eines Gravierverstärkers einer Graviermaschine erfolgen die Vorgabe von Einstellwerten, das Ausmessen der geometrischen Abmessungen der bei Probegravuren gravierten Probenäpfchen und die Ermittlung neuer Einstellwerte anhand der Meßergebnisse im wesentlichen manuell, wobei die Einstellungen und nachfolgende Probegravuren solange fortgesetzt werden, bis eine optimale Kalibrierung erreicht ist. Die herkömmliche Vorgehensweise hat den Nachteil daß der Operator praktische Erfahrungen über die Zusammenhänge zwischen den elektrischen Einstellgrößen und den zu erwartenden geometrischen Istabmessungen der Probenäpfchen haben muß, wobei zahlreiche Parameter und Randbedingungen zu beachten sind, wie das Übertragungsverhalten des Gravierverstärkers und des Gravierorgans, der Schneidwinkel und der Abnutzungsgrad des Gravierstichels sowie die Materialhärte der zu gravierenden Mantelfläche des Druckzylinders.

Aus der EP 0 595 324 A ist bereits ein automatisches Verfahren zur Kalibrierung eines Gravierverstärkers einer Graviermaschine bekannt, bei dem Signalwerte zur Änderung mindestens eines Parameters "Vibration", "Licht", "Tiefe" oder "Mittelton am Gravierverstärker eingestellt werden, mit den eingestellten Signalwerten eine Probegravur durchgeführt wird, die Istabmessungen der gravierten Probenäpfchen ausgemessen werden und bei dem aus den ausgemessenen Istabmessungen und vorgegebenen Sollabmessungen unter Berücksichtigung von zuvor berechneten Übertragungsfunktionen Differenzwerte ermittelt werden, mit denen die Signalwerte korrigiert werden, wobei die einzelnen Schritte mit den jeweils korrigierten Signalwerten routinemäßig solange wiederholt werden, bis die Istabmessungen der gravierten Probenäpfchen innerhalb eines Toleranzbereichs liegen.

Ein ähnliches Verfahren zur Kalibrierung eines Gravierverstärkers einer Graviermaschine ist aus der US 5 438 422 A bekannt.

Aufgabe der vorliegenden Erfindung ist es daher, ein Verfahren zur Kalibrierung eines Gravierverstärkers in einer elektronischen Graviermaschine derart zu verbessern, daß ohne Kenntnis der einzelnen Übertragungsfunktionen und Randbedingungen ein weitestgehender automatischer und optimaler Ablauf der Kalibrierung gewährleistet ist.

Diese Aufgabe wird durch die Merkmale des Anspruchs 1 gelöst.

Vorteilhafte Weiterbildungen und Ausgestaltungen sind in den Unteransprüchen angegeben.

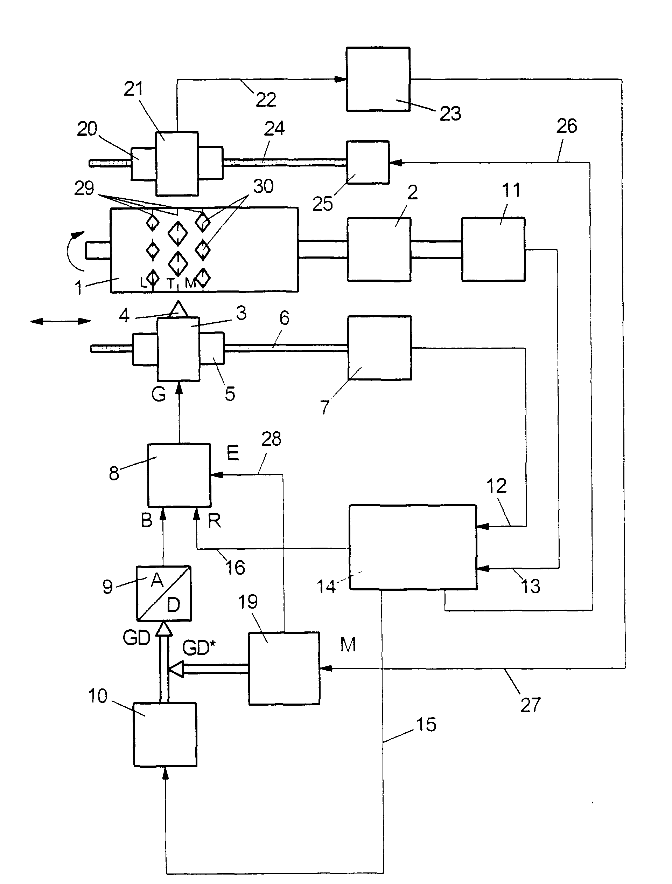

Die Erfindung wird nachfolgend anhand der Figur erläutert, die ein prinzipielles Ausführungsbeispiel für eine elektronische Graviermaschine zur Gravur von Druckzylindern für den Tiefdruck zeigt Die Graviermaschine ist beispielsweise ein HelioKlischograph® der Firma Hell Gravure Systems GmbH, Kiel, DE.

Ein Druckzylinder (1) wird von einem Zylinderantrieb (2) rotatorisch angetrieben. Die Gravur auf dem Druckzylinder (1) erfolgt mittels eines Gravierorgans (3), das eine Gravierstichel (4) als Schneidwerkzeug aufweist.

Das Gravierorgan (3) befindet sich auf einem Gravierwagen (5), der mittels einer Spindel (6) von einem Gravierwagenantrieb (7) in Achsrichtung des Druckzylinders (1) bewegt wird.

Der Gravierstichel (4) des Gravierorgans (3) schneidet gravierlinienweise eine Folge von in einem Gravurraster angeordneten Näpfchen in die Mantelfläche des rotierenden Druckzylinders (1), während sich der Gravierwagen (5) mit dem Gravierorgan (3) in Vorschubrichtung axial an dem Druckzylinder (1) entlang bewegt.

Der Gravierstichel (4) des Gravierorgans (3) wird durch ein Graviersignal G gesteuert. Das Graviersignal G wird in einem Gravierverstärker (8) durch Überlagerung eines periodischen Vibrationssignals R mit Bildsignalwerten B gebildet, welche die Tonwerte der zu gravierenden Näpfchen zwischen "Licht" (Weiß) und "Tiefe" (Schwarz) repräsentieren. Während das periodische Vibrationssignal R eine oszillierende Hubbewegung des Gravierstichels (4) zur Erzeugung des Gravurrasters bewirkt, bestimmen die Bildsignalwerte B in Verbindung mit der Amplitude des Vibrationssignals R die geometrischen Abmessungen der gravierten Näpfchen wie Querdiagonale, Längsdiagonale, Stegbreite und Durchstich.

Die Bildsignalwerte B werden in einem D/A-Wandler (9) aus Gravurdaten GD gewonnen, die in einem Gravurdatenspeicher (10) abgelegt sind und aus diesem Gravierlinie für Gravierlinie ausgelesen und dem D/A-Wandler (9) zugeführt werden. Jedem Gravierort für ein Näpfchen ist im Gravurraster ein Gravurdatum zugeordnet, welches als Gravierinformation den zu gravierenden Tonwert zwischen den Tonwerten "Licht" und "Tiefe" enthält.

Dem Druckzylinder (1) ist ein XY-Koordinatensystem zugeordnet, dessen X-Achse in Achsrichtung und dessen Y-Achse in Umfangsrichtung des Druckzylinders (1) orientiert sind. Die x-Ortskoordinaten der im Gravurraster angeordneten Gravierorte auf dem Druckzylinder (1) werden von dem Gravierwagenantrieb (7) erzeugt. Ein mit dem Zylinderantrieb (2) mechanisch gekoppelter Positionsgeber (11) erzeugt die entsprechende y-Ortskoordinaten der Gravierorte auf dem Druckzylinder (1). Die Ortskoordinaten (x, y) der Gravierorte werden über Leitungen (12, 13) einem Steuerwerk (14) zugeführt.

Das Steuerwerk (14) steuert die Adressierung und das Auslesen der Gravurdaten GD aus dem Gravurdatenspeicher (10) in Abhängigkeit von den xy-Ortskoordinaten der aktuellen Gravierorte über eine Leitung (15). Das Steuerwerk (14) erzeugt außerdem das Vibrationssignal R auf einer Leitung (16) mit der für die Erzeugung des Gravurrasters erforderlichen Frequenz.

Zur Gravur von Probenäpfchen bei einer Probegravur, die vor der eigentlichen Gravur des Druckzylinders (1) stattfindet, weist die Graviermaschine einen Probegravurrechner (19) auf, der die erforderlichen Gravurdaten GD*, welche die geometrischen Sollabmessungen der zu gravierenden Probenäpfchen darstellen, als digital/analog gewandelte Bildsignalwerte B an den Gravierverstärker (8) liefert.

Zur Aufnahme eines Videobildes der bei der Probegravur erzeugten Probenäpfchen ist ein in Achsrichtung des Druckzylinders (1) verschiebbarer Meßwagen (20) mit einer Videokamera (21) vorgesehen, die über eine Leitung (22) mit einer Bildauswertestufe (23) zum Ausmessen der geometrischen Istabmessungen der Probenäpfchen im Videobild verbunden ist Der Meßwagen (20) kann automatisch über eine Spindel (24) von einem Meßwagenantrieb (25) auf die erforderlichen axialen Meßpositionen bewegt werden. Der Meßwagenantrieb (25) wird durch einen Steuerbefehl auf einer Leitung (26) von dem Steuerwerk (14) aus gesteuert Alternativ kann die Videokamera (21) auch im Bereich des Gravierorgans (3) angeordnet werden.

Die in der Bildauswertestufe (23) ermittelten geometrischen Istabmessungen der gravierten Probenäpfchen werden als Meßwerte M über eine Leitung (27) an den Probegravurrechner (19) übertragen. In dem Probegravurrechner (19) werden durch Vergleich der geometrischen Istabmessungen mit den vorgegebenen geometrischen Sollabmessungen elektrische Einstellwerte E für die Parameter "Vibration", "Licht", "Tiefe" und "Mittelton" gewonnen, die dem Gravierverstärker (8) über eine Leitung (28) zugeführt werden. Mit Hilfe der elektrischen Einstellwerte E werden das Vibrationssignal R und das Graviersignal G in dem Gravierverstärker (8) derart kalibriert, daß die bei der späteren Gravur des Druckzylinders (1) tatsächlich erzeugten Näpfchen die für eine tonwertrichtige Gravur erforderlichen geometrischen Sollabmessungen aufweisen. Die Kalibrierung kann manuell, vorzugsweise aber automatisch durch eine dynamische Regelung erfolgen, die vor oder während der eigentlichen Druckformherstellung stattfinden kann. Die erfindungsgemäße Kalibrierung bezüglich der Parameter "Vibration", "Licht", "Tiefe" und "Mittelton" besteht aus aufeinanderfolgenden Zyklen oder Abläufen, wobei ein Ablauf aus folgenden Schritten [A] bis [F] besteht:

[A] Eingabe der elektrischen Einstellwerte $E_n$ für die einzelnen Parameter "Vibration", "Licht", "Tiefe" und "Mittelton" eines Ablaufs (n),
[B] Durchführung einer Probegravur mit den eingegebenen Einstellwerten $E_n$,
[C] Ausmessen der geometrischen Istabmessungen der gravierten Probenäpfchen,
[D] Vergleich der geometrischen Istabmessungen mit den vorgegebenen Sollabmessungen,
[E] Bereitstellung von Übertragungskoeffizienten, welche die Zusammenhänge zwischen den Änderungen der elektrischen Signalwerte und den daraus resultierenden Änderungen der geometrischen Abmessungen der gravierten Näpfchen wiedergeben, und
[F] Ermittlung von Differenzwerten $\Delta E$ aus den geometrischen Istabmessungen und den Sollabmessungen der gravierten Probenäpfchen und den Übertragungskoeffizienten sowie Berechnung von neuen Einstellwerten aus den Differenzwerten $\Delta E$ gemäß Gleichung $E_{n+1} = E_n + \Delta E$ für den nachfolgenden Ablauf (n+1).

Die einzelnen Schritte [A] bis [F] eines Ablaufs werden nachfolgend näher erläutert.

Schritt [A]

In dem Schritt [A] werden die elektrischen Einstellwerte $E_R$, $E_L$, $E_T$ und $E_M$ für die einzelnen Parameter "Vibration", "Licht", "Tiefe" und "Mittelton" in den Gravierverstärker (8) eingegeben, wobei die Einstellwerte $E_R$ die Amplitude des Vibrationssignals R, die Einstellwerte $E_L$ und $E_T$ die Graviersignalwerte $G_L$ und $G_T$ für "Licht" und "Tiefe" sowie die Einstellwerte $E_M$ den Graviersignaiwert $G_M$ für die Korrektur eines Mitteltons steuern.

In dem Ablauf I sind die Einstellungswerte $E_I$ im allgemeinen Erfahrungswerte, in den folgenden Abläufen (n+1) die jeweils im Schritt [E] des vorangegangenen Ablaufs (n) berechneten Einstellwerte $E_{n+1}$.

Schritt [B]

Im Schritt [B] wird eine Probegravur mit den im Schritt [A] eingegebenen Einstellwerten $E_{Rn}$, $E_{Ln}$, $E_{Tn}$ und $E_{Mn}$ durchgeführt. Zur Erzeugung der Probenäpfchen ruft der Probegravurrechner (19) beispielsweise die Gravurdaten GD* für die Sollwerte "Tiefe ", "Licht" und für mindestens einen zwischen den Tonwerten "Licht" und "Tiefe" liegenden "Mittelton" auf. Die Gravurdaten GD* repräsentieren die vorgegebenen geometrischen Sollabmessungen der Probenäpfchen, beispielsweise die Soll-Querdiagonalen $d'_{QL}$, $d'_{QT}$ und $d'_{QM}$ sowie bei Probenäpfchen mit Durchstich die Breite $d'_K$ des Durchstichs oder Kanals. Die aufgerufenen Gravurdaten GD* werden in das Graviersignal G für das Gravierorgan (3) umgesetzt. Das Gravierorgan (3) graviert auf nebeneinander liegenden Gravierlinien (29) mindestens ein Probenäpfchen (30) für "Licht" (L), "Tiefe" (T) und "Mittelton" (M). Vorzugsweise werden auf jeder Gravierlinie (29) mehrere gleiche Probenäpfchen (30) graviert, beispielsweise über einen wählbaren Gravierlinienbereich.

Schritt [C]

In dem Schritt [C] nimmt die Videokamera (21) ein Videobild der gravierten Probenäpfchen (30) auf, um in der Bildauswertestufe (23) anhand des Videobildes die geometrischen Istabmessungen, nämlich die Querdiagonalen $d''_{QL}$, $d''_{QT}$, $d''_{QM}$ und die Breite $d''_K$ des Durchstichs der gravierten Probenäpfchen (30) für "Licht", "Tiefe" und "Mittelton" auszumessen und als Meßwerte M an den Probegravurrechner (19) weiterzuleiten. Ein Verfahren zur automatischen Auswertung eines Videobildes zwecks Ermittlung der geometrischen Abmessungen von Probenäpfchen ist beispielsweise ausführlich in der nicht vorveröffentlichten WO 98/55302 A (PCT/DE 98/01441) erläutert.

Schritt [D]

In dem Schritt [D] werden die geometrischen Istabmessungen $d''_{QL}$, $d''_{QT}$, $d''_{QM}$ und $d''_K$ und die entsprechenden geometrischen Sollabmessungen $d'_{QL}$, $d'_{QT}$, $d'_{QM}$ und $d'_K$ miteinander verglichen und anhand des Vergleichs entschieden, ob ein weiterer Ablauf zur Optimierung der Kalibrierung folgen muß oder die Kalibrierung bereits beendet werden kann. Die Kalibrierung wird beispielsweise dann abgeschlossen, wenn entweder die gemessenen Istabmessungen mit den Sollabmessungen übereinstimmen oder wenn die erreichten Istabmessungen innerhalb eines vorgegebenen Toleranzbereichs um die vorgegebenen Sollabmessungen liegen. Anstelle der Querdiagonalen $d_{QL}$, $d_{QT}$ und $d_{QM}$ der Näpfchen können auch deren Längsdiagonalen untersucht werden.

Schritt [E]

Im Schritt [E] werden Übertragungskoeffizienten "f" bereitgestellt, welche die funktionellen Zusammenhänge zwischen den Änderungen der elektrischen Signalwerte $\Delta R$, $\Delta G_L$, $\Delta G_T$ und $\Delta G_M$ und den daraus resultierenden Änderungen der geometrischen Abmessungen $\Delta d_{QL}$, $\Delta d_{QT}$, $\Delta d_{QM}$ und $\Delta d_K$ der gravierten Näpfchen berücksichtigen. Diese funktionsmäßigen Zusammenhänge werden nachfolgend erläutert.

Eine Änderung des Vibrationssignals $\Delta R$ zur Kalibrierung des Parameters "Vibration" beeinflußt die Querdiagonale $d_{QT}$ und den Durchstich $d_K$ eines den Tonwert "Tiefe" repräsentierenden Näpfchens nach folgender Beziehung (I):

$$\Delta(d_{QT} - d_K) = f(R) \times \Delta R \qquad\qquad (I)$$

Zusätzlich nimmt eine Änderung des Vibrationssignals $\Delta R$ Einfluß auf die Querdiagonalen $d_{QL}$, $d_{QT}$ und $d_{QM}$ der die Tonwerte "Licht", "Tiefe" und "Mittelton" repräsentierenden Näpfchen nach folgenden Beziehungen (II), (III) und (IV):

$$\Delta d_{QL}(R) = f_L(R) \times \Delta R \qquad\qquad (II)$$

$$\Delta d_{QT}(R) = f_T(R) \times \Delta R \qquad (III)$$

$$\Delta d_{QM}(R) = f_M(R) \times \Delta R \qquad (IV)$$

Eine Änderung des Graviersignalwertes $\Delta G_L$ zur Kalibrierung des Parameters "Licht" beeinflußt die Querdiagonale $d_{QL}$ eines den Tonwert "Licht" repräsentierenden Näpfchens nach folgender Beziehung (V):

$$\Delta d_{QL} = 1/f(G_L) \times \Delta G_L \qquad (V)$$

Zusätzlich nimmt eine Änderung des Graviersignalwertes $\Delta G_L$ Einfluß auf die Querdiagonale $d_{QM}$ eines den Tonwert "Mittelton" repräsentierenden Näpfchens nach folgender Beziehung (VI):

$$\Delta d_{QM}(G_L) = f_M(G_L) \times \Delta G_L \qquad (VI)$$

Eine Änderung des Graviersignalwertes $\Delta G_T$ zur Kalibrierung des Parameters "Tiefe" beeinflußt die Querdiagonale $d_{QT}$ eines den Tonwert "Tiefe" repräsentierenden Näpfchens nach folgender Beziehung (VII):

$$\Delta d_{QT} = 1/f(G_T) \times \Delta G_T \qquad (VII)$$

Zusätzlich nimmt eine Änderung des Graviersignalwertes $\Delta G_T$ Einfluß auf die Querdiagonale $d_{QM}$ eines den Tonwert "Mittelton" repräsentierenden Näpfchens nach folgender Beziehung (VIII):

$$\Delta d_{QM}(G_T) = f_M(G_T) \times \Delta G_T \qquad (VIII)$$

Durch eine Korrektur des Mitteltons wird die mechanische Abnutzung des Gravierstichels eines Gravierorgans, die sich insbesondere durch ein verkleinertes Näpfchenvolumen bei einen Mittelton repräsentierenden Näpfchen bemerkbar macht, korrigiert. Eine Änderung des Graviersignalwertes $\Delta G_M$ zur Mitteltonkorrektur beeinflußt die Querdiagonale $d_{QM}$ eines den Mittelton repräsentierenden Näpfchens nach folgender Beziehung (IV):

$$\Delta d_{QM} = 1/f(G_M) \times \Delta G_M \qquad (IX)$$

Unter der im beschriebenen Ausführungsbeispiel gemachten Annahme, daß die Zusammenhänge näherungsweise linear sind, ist "f" jeweils ein Übertragungskoeffizient. Für den Fall, daß die funktionalen Zusammenhänge jedoch nicht linear sein sollten, kann "f" jeweils auch eine Übertragungsfunktion sein. Die angegebenen Zusammenhänge sind direkt von der Art der Signalbearbeitung abhängig. Durch eine andere Signalbearbeitung kann sich der Umfang der funktionalen Zusammenhänge ändern.

Die verschiedenen Übertragungskoeffizienten f in den Beziehungen (I) bis (IX), welche die Gesamtübertragungsfunktion der Graviermaschine zwischen den eingangsseitigen elektrischen Einstellwerten und den ausgangsseitigen geometrischen Abmessungen der gravierten Näpfchen wiedergeben, werden in zweckmäßiger Weise vor der Kalibrierung anhand von Probegravuren ermittelt und zur späteren Verwendung in dem Probegravurrechner (19) gespeichert.

Schritt [F]

In dem Schritt [F] werden jeweils für den nachfolgenden Ablauf (n+1) ein neuer Vibrationssignalwert $R_{n+1}$ sowie neue Graviersignalwerte $G_{Ln+1}$, $G_{Tn+1}$ und $G_{Mn+1}$ für die einzelnen Parameter "Vibration", "Licht", "Tiefe" und "Mittelton" berechnet.

Parameter "Vibration"

Zunächst wird unter Berücksichtigung der Beziehung (I) aus den gemessenen Istabmessungen $d''_{QT}$ und $d''_K$, den Sollabmessungen $d'_{QT}$ und $d'_K$ und dem zuvor ermittelten Übertragungskoeffizienten f(R) ein Differenzwert $\Delta R$ für das Vibrationssignals R nach Gleichung (X) berechnet.

$$\Delta R = 1/f(R) \ [(d'_{QT} - d'_K) - (d''_{QT} - d''_K)] \tag{X}$$

Dann wird der Vibrationssignalwert $R_{n+1}$ für den neuen Ablauf (n+1) aus dem nach Gleichung (X) ermittelten Differenzwert $\Delta R$ und dem Vibrationssignalwert $R_n$ des vorangegangenen Ablaufs (n) nach Gleichung (XI) ermittelt.

$$R_{n+1} = R_n + \Delta R \tag{XI}$$

Dieser Vibrationssignalwert $R_{n+1}$ wird durch einen entsprechenden Einstellwert $E_R$ in den Gravierverstärker (8) für einen neuen Ablauf (n+1) eingegeben.

Parameter "Licht"

Zunächst wird eine fiktive Querdiagonale $d^*_{QL}$ als Summe aus der gemessenen Querdiagonalen $d''_{QL}$ und einer Querdiagonalenänderung $\Delta d_{QL}(R)$, die sich aufgrund der Änderung $\Delta R$ des Vibrationssignals gemäß der Beziehung (II) ergeben hat, nach Gleichung (XII) berechnet.

$$d^*_{QL} = d''_{QL} + \Delta d_{QL}(R) \tag{XII}$$

Mit Hilfe der fiktiven Querdiagonalen $d^*_{QL}$ wird festgestellt, wie sich der Graviersignalwert $\Delta G_L$ ändern muß, damit die Soll-Querdiagonale $d'_{QL}$ erreicht wird.
Dazu wird zunächst die Abweichung $\Delta d_{QL}$ der fiktiven Querdiagonalen $d^*_{QL}$ von der Soll-Querdiagonalen $d'_{QL}$ nach Gleichung (XIII) ermittelt.

$$\Delta d_{QL} = d^*_{QL} - d'_{QL} \tag{XIII}$$

Aus dem Zusammenhang (V) wird dann die zur Korrektur der Abweichung $\Delta d_{QL}$ erforderliche Änderung des Graviersignalwertes $\Delta G_L$ unter Berücksichtigung des zuvor ermittelten Übertragungskoeffizienten $f(G_L)$ nach Gleichung (XIV) berechnet.

$$\Delta G_L = f(G_L) \ x \ \Delta d_{QL} \tag{XIV}$$

Damit ergibt sich der neue Graviersignalwert $G_{Ln+1}$ für den Ablauf (n+1) gemäß Gleichung (XV).

$$G_{Ln+1} = G_{Ln} + \Delta G_L \tag{XV}$$

Dieser Graviersignalwert $G_{Ln+1}$ wird durch einen entsprechenden Einstellwert $E_L$ in den Gravierverstärker (8) für einen neuen Ablauf (n+1) eingegeben.

Parameter "Tiefe"

Zunächst wird eine fiktive Querdiagonale $d^*_{QT}$ als Summe aus der gemessenen Querdiagonalen $d''_{QT}$ und einer Querdiagonalenänderung $\Delta d_{QT}(R)$, die sich aufgrund der Änderung $\Delta R$ des Vibrationssignals gemäß der Beziehung (III) ergeben hat, nach Gleichung (XVI) berechnet.

$$d^*_{QT} = d''_{QT} + \Delta d_{QT}(R) \tag{VXI}$$

Mit Hilfe der fiktiven Querdiagonalen $d^*_{QT}$ wird festgestellt, wie sich der Graviersignalwert $\Delta G_T$ ändern muß, damit die Soll-Querdiagonale $d'_{QT}$ erreicht wird.

Dazu wird zunächst die Abweichung $\Delta d_{QT}$ der fiktiven Querdiagonalen $d^*_{QT}$ von der SolS-Querdiagonalen $d'_{QT}$ nach Gleichung (XVII) ermittelt.

$$\Delta d_{QT} = d^*_{QT} - d'_{QT} \tag{XVII}$$

Aus dem Zusammenhang (VII) wird dann die zur Korrektur der Abweichung $\Delta d_{QT}$ erforderliche Änderung des Graviersignalwertes $\Delta G_T$ unter Berücksichtigung des zuvor ermittelten Übertragungskoeffizienten $f(G_T)$ nach Gleichung (XVIII) berechnet.

$$\Delta G_T = f(G_T) \times \Delta d_{QT} \tag{XVIII}$$

Damit ergibt sich der neue Graviersignaiwert $G_{Tn+1}$ für den Ablauf (n+1) gemäß Gleichung (IXX).

$$G_{Tn+1} = G_{Tn} + \Delta G_T \tag{IXX}$$

Dieser Graviersignalwert $G_{Tn+1}$ wird durch einen entsprechenden Einstellwert $E_T$ in den Gravierverstärker (8) für einen neuen Ablauf (n+1) eingegeben.

Parameter "Mittelton"

Zunächst wird eine fiktive Querdiagonale $d^*_{QM}$ als Summe aus der gemessenen Querdiagonalen $d''_{QM}$ und den Querdiagonalenänderungen $\Delta d_{QM}(R)$, $\Delta d_{QM}(G_L)$ und $\Delta d_{QM}(G_T)$ nach Gleichung (XX) berechnet. Die Querdiagonalenänderungen $\Delta d_{QM}(R)$, $\Delta d_{QM}(G_L)$ und $\Delta d_{QM}(G_T)$ ergeben sich dabei aufgrund der Änderung $\Delta R$ des Vibrationssignals R gemäß der Beziehung (IV) und der Änderungen $\Delta G_L$ und $\Delta G_T$ des Graviersignalwerte G gemäß der Beziehungen (VI) und (VIII).

$$d^*_{QM} = d''_{QM} + \Delta d_{QM}(R) + \Delta d_{QM}(G_L) + \Delta d_{QM}(G_T) \tag{XX}$$

Mit Hilfe der fiktiven Querdiagonalen $d^*_{QM}$ wird festgestellt, wie sich der Graviersignalwert $\Delta G_M$ ändern muß, damit die Soll-Querdiagonale $d'_{QM}$ erreicht wird.

Dazu wird zunächst die Abweichung $\Delta d_{QM}$ der fiktiven Querdiagonalen $d^*_{QM}$ von der Soll-Querdiagonalen $d'_{QM}$ nach Gleichung (XXI) ermittelt.

$$\Delta d_{QM} = d^*_{QM} - d^*_{QM} \tag{XXI}$$

Aus dem Zusammenhang (IV) wird dann die zur Korrektur der Abweichung $\Delta d_{QM}$ erforderliche Änderung des Graviersignalwertes $\Delta G_M$ unter Berücksichtigung des zuvor ermittelten Übertragungskoeffizienten $f(G_M)$ nach Gleichung (XXII) berechnet.

$$\Delta G_M = f(G_M) \times \Delta d_{QM} \tag{XXII}$$

Damit ergibt sich der neue Graviersignalwert $G_{Mn+1}$ für den Ablauf (n+1) gemäß Gleichung (XXIII) zu:

$$G_{Mn+1} = G_{Mn} + \Delta G_M \tag{XXIII}$$

Dieser Graviersignalwert $G_{Mn+1}$ wird durch einen entsprechenden Einstellwert $E_M$ in den Gravierverstärker (8) für einen neuen Ablauf (n+1) eingegeben.

Die einzelnen Abläufe werden unter Beibehaltung der Übertragungskoeffizienten f solange wiederholt, bis festgestellt wird, daß entweder die gemessenen Istabmessungen mit den Sollabmessungen übereinstimmen oder daß die erreichten Istabmessungen innerhalb eines vorgegebenen Toleranzbereichs um die vorgegebenen Sollabmessungen liegen.

Um die Anzahl der einzelnen Abläufe zu verkleinern und damit eine schnellere Kalibrierung zu erreichen, wird vorgeschlagen, im Schritt [D] mindestens innerhalb eines Ablaufs (n), vorzugsweise innerhalb des zweiten Ablaufs II, die Differenzen zwischen den Sollabmessungen $d'_{QT}$, $d'_{QL}$, $d'_{QM}$ und $d'_K$ und den jeweils erreichten Istabmessungen $d''_{QT}$, $d''_{OL}$, $d''_{QM}$ und $d''_K$ festzustellen und, falls die Differenzen größer als ein vorgegebener Toleranzbereich unterhalb der Sollabmessungen ist, im Sinne einer schnelleren Annäherung der Istabmessungen an die Sollabmessungen im Schritt [E] verbesserte Übertragungskoeffizienten f' zu ermitteln und dann im Schritt [F] anhand der neuen Übertragungskoeffizienten f' einen korrigierten Vibrationssignalwert $R_{n+1}$ sowie korrigierte Graviersignalwerte $G_{Ln+1}$, $G_{Tn+1}$ und $G_{Mn+1}$ für den nachfolgenden Ablauf (n+1) zu berechnen, um eine schnelle Kalibrierung zu erreichen. Die verbesserten Übertragungskoeffizienten f' können gespeichert und in vorteilhafter Weise für eine spätere Kalibrierung vor der Gravur eines neuen Druckzylinders (1) verwendet werden.

Die Ermittlung der verbesserten Übertragungskoeffizienten f', welche die Zusammenhänge zwischen den eingestellten elektrischen Einstellwerten $E_n$ ($R_n$, $G_{Ln}$, $G_{Tn}$, $G_{Mn}$) und den gemessenen geometrischen Abmessungen $d''_n$ ($d''_{QL}$, $d''_{QT}$, $d''_{QM}$, $d''_K$) wiedergeben, erfolgt durch Differenzbildung zwischen den Einstellwerte $E_n$ und $E_{n+1}$ und durch Differenzbildung zwischen den gemessenen geometrischen Abmessungen $d''_n$ und $d''_{n+1}$ von zwei aufeinanderfolgenden Abläufen (n) und (n+1) nach folgendem allgemeinen Schema:

Ablauf n:  Einstellwert $E_n$ ⇒ f ⇒ gemessene Abmessungen $d''_n$

Ablauf (n+1):  Einstellwert $E_{n+1}$ ⇒ f ⇒ gemessene Abmessungen $d''_{n+1}$

Differenzbildung: $\Delta(E_n - E_{n+1})$ ⇒ f' ⇒ $\Delta(d''_n - d''_{n+1})$

Die Ermittlung eines verbesserten Übertragungskoeffizienten f' wird am Beispiel des Parameters "Vibration" näher erläutert.

Ein in dem ersten Ablauf I eingegebener erster Vibrationssignalwert $R_I$ ergibt bei der ersten Messung die geometrischen Abmessungen $d''_{QTI}$ und $d''_{KI}$. Ein in dem zweiten Ablauf II eingegebener zweiter Vibrationssignalwert $R_{II}$ ergibt bei der zweiten Messung die geometrischen Abmessungen $d''_{QTII}$ und $d''_{KII}$. Nach Differenzbildung läßt sich der verbesserte Übertragungskoeffizient f' für den Parameter "Vibration" bei bekanntem $\Delta R$ und bekannten geometrischen Abmessungen gemäß Gleichung (XIV) berechnen.

$$\Delta R = (R_{II} - R_I) = f'[(d''_{QTII} - d''_{QTI}) - (d''_{KII} - d''_{KI})] \qquad (XIV)$$

Die Ermittlung verbesserter Übertragungskoeffizienten f' für die anderen Parameter "Licht", "Tiefe" und "Mittelton" läuft analog ab.

## Patentansprüche

**1.** Verfahren zur Kalibrierung eines Gravierverstärkers in einer elektronischen Graviermaschine zur Gravur von Druckzylindern für den Tiefdruck, bei dem

a) aus Gravurwerten (GD), welche Solltonwerte repräsentieren, und einem periodischen Vibrationssignal (R) zur Erzeugung eines Gravurrasters in einem durch Signalwerte ($R$, $G_L$, $G_T$, $G_M$) einstellbaren Gravierverstärker (8) ein Graviersignal (G) zur Ansteuerung des Gravierstichels (4) eines Gravierorgans (3) gewonnen wird,

b) der Gravierstichel (4) in den Druckzylinder (1) Näpfchen graviert, deren Istabmessungen gravierte Isttonwerte repräsentieren,

c) Übertragungsfunktionen (f) ermittelt werden, welche die Zusammenhänge zwischen am Gravierverstärker (8) eingestellten Änderungen der Signalwerte (R, $G_L$, $G_T$, $G_M$) und den daraus resultierenden Änderungen der Istabmessungen der Näpfchen wiedergeben,

d) Signalwerte (R, $G_L$, $G_T$, $G_M$) zur Änderung mindestens eines Parameters "Vibration", "Licht", "Tiefe" oder "Mittelton" am Gravierverstärker (8) eingestellt werden,

e) mit den Signalwerten (R, $G_L$, $G_T$, $G_M$) Probenäpfchen (30) für vorgegebene Sollabmessungen graviert und deren Istabmessungen ausgemessen werden,

f) aus den Istabmessungen und den Sollabmessungen der Probenäpfchen (30) unter Berücksichtigung der Übertragungsfunktionen (f) Differenzwerte ($\Delta R$, $\Delta G_L$, $\Delta G_T$, $\Delta G_M$) ermittelt werden,

g) die Signalwerte (R, $G_L$, $G_T$, $G_M$) durch Addition der Differenzwerte ($\Delta R$, $\Delta G_L$, $\Delta G_T$, $\Delta G_M$) korrigiert werden und

h) die Abläufe d) bis g) jeweils mit den korrigierten Signalwerten (R, $G_L$, $G_T$, $G_M$) solange wiederholt werden, bis die Istabmessungen der Probenäpfchen (30) mindestens innerhalb eines Toleranzbereichs um die Sollabmessungen liegen, **dadurch gekennzeichnet, daß** zur Verkürzung der Kalibrierungszeit

i) bei jedem Ablauf d) bis g) die Istabmessungen der Probenäpfchen (30) mit den Sollabmessungen verglichen werden,

j) falls die Istabmessungen außerhalb des Toleranzbereichs liegen, die Übertragungsfunktionen (f) neu berechnet werden,

k) die Differenzwerte ($\Delta R$, $\Delta G_L$, $\Delta G_T$, $\Delta G_M$) unter Berücksichtigung der neu berechneten Übertragungsfunktionen (f') ermittelt werden und

l) die Signalwerte (R, $G_L$, $G_T$, $G_M$) mit den neuen Differenzwerten ($\Delta R$, $\Delta G_L$, $\Delta G_T$, $\Delta G_M$) korrigiert werden.

2.  Verfahren nach Anspruch 1, **dadurch gekennzeichnet, daß** die Berechnung der neuen Übertragungsfunktionen (f') jeweils durch Differenzbildung zwischen den eingestellten Signalwerten (R, $G_L$, $G_T$, $G_M$) und durch Differenzbildung zwischen den funktionsmäßig zugehörigen Istabmessungen der Probenäpfchen (30) von zwei aufeinander folgenden Abläufen d) bis g) erfolgt.

3.  Verfahren nach Anspruch 1 oder 2, **dadurch gekennzeichnet, daß** die Abmessung eines Probenäpfchens (30) die Querdiagonalen ($d_Q$), die Längsdiagonale ($d_L$) und gegebenenfalls der Durchstich ($d_K$) ist.

4.  Verfahren nach mindestens einem der Ansprüche 1 bis 3, **dadurch gekennzeichnet, daß** der Differenzwert ($\Delta R$) des Vibrationssignalwertes (R) für den Parameter "Vibration" aus der Differenz zwischen den Istabmessungen ($d''_{QT}$, $d''_K$) und den Sollabmessungen ($d'_{QT}$, $d'_K$) eines den Tonwertbereich "Tiefe" repräsentierenden Probenäpfchens (30) ermittelt wird.

5.  Verfahren nach mindestens einem der Ansprüche 1 bis 4, **dadurch gekennzeichnet, daß**

-   eine fiktive Querdiagonale ($d^*_{QL}$) für ein den Tonwertbereich "Licht" repräsentierendes Probenäpfchen (30) als Summe aus der gemessenen Querdiagonalen ($d''_{QL}$) und einer Querdiagonalenänderung ($\Delta d_{QL}(R)$), die sich aufgrund der Änderung ($\Delta R$) des Vibrationssignals (R) ergibt, **berechnet wird,**

-   die Abweichung ($\Delta d_{QL}$) der fiktiven Querdiagonalen ($d^*_{QL}$) von der Soll-Querdiagonalen ($d'_{QL}$) ermittelt wird und

-   der Differenzwert ($\Delta G_L$) des Graviersignalwertes ($G_L$) für den Parameter "Licht" aus der festgestellten Abweichung ($\Delta d_{QL}$) und der Übertragungsfunktion [$f(G_L)$; $f'(G_L)$] berechnet wird, welche den Zusammenhang zwischen einer Änderung des Graviersignalwertes ($G_L$) für den Parameter "Licht" und der daraus resultierenden Änderung der Querdiagonalen ($d_{QL}$) eines den Tonwertbereich "Licht" repräsentierenden Probenäpfchens (30) wiedergibt.

6.  Verfahren nach mindestens einem der Ansprüche 1 bis 5, **dadurch gekennzeichnet, daß**

-   eine fiktive Querdiagonale ($d^*_{QT}$) für ein den Tonwertbereich "Tiefe" repräsentierendes Probenäpfchen (30) als Summe aus der gemessenen Querdiagonalen ($d''_{QT}$) und einer Querdiagonalenänderung ($\Delta d_{QT}(R)$), die sich aufgrund der Änderung ($\Delta R$) des Vibrationssignals (R) ergibt, berechnet wird,

-   die Abweichung ($\Delta d_{QT}$) der fiktiven Querdiagonalen ($d^*_{QT}$) von der Soll-Querdiagonalen ($d'_{QT}$) ermittelt wird und

-   der Differenzwert ($\Delta G_T$) des Graviersignalwertes ($G_T$) für den Parameter "Tiefe" aus der festgestellten Abwei-

chung ($\Delta d_{QT}$) und der Übertragungsfunktion [$f(G_T)$; $f'(G_T)$] berechnet wird, welche den Zusammenhang zwischen einer Änderung des Graviersignalwertes ($G_T$) für den Parameter "Tiefe" und der daraus resultierenden Änderung der Querdiagonalen ($d_{QT}$) eines den Tonwertbereich "Tiefe" repräsentierenden Probenäpfchens (30) wiedergibt.

**7.** Verfahren nach mindestens einem der Ansprüche 1 bis 6, **dadurch gekennzeichnet, daß**

- eine fiktive Querdiagonale ($d^*_{QM}$) für ein den Tonwertbereich "Mittelton" repräsentierendes Probenäpfchen (30) als Summe aus der gemessenen Querdiagonalen ($d''_{QM}$) und Querdiagonalenänderungen ($\Delta d_{QM}(R)$; $\Delta d_{QM}(G_L)$ $\Delta d_{QM}(G_T)$), die sich aufgrund der Änderung ($\Delta R$) des Vibrationssignals (R) ergeben, **berechnet wird,**
- die Abweichung ($\Delta d_{QM}$) der fiktiven Querdiagonalen ($d^*_{QM}$) von der Soll-Querdiagonalen ($d'_{QM}$) ermittelt wird und
- der Differenzwert ($\Delta G_M$) des Graviersignalwertes ($G_M$) für den Parameter "Mittelton" aus der festgestellten Abweichung ($\Delta d_{QM}$) und der Übertragungsfunktion [$f(G_M)$ $f'(G_M)$] berechnet wird, welche den Zusammenhang zwischen einer Änderung des Graviersignalwertes ($G_M$) für den Parameter "Mittelton" und der daraus resultierenden Änderung der Querdiagonalen ($d_{QM}$) eines den Tonwertbereich "Mittelton" repräsentierenden Probenäpfchens (30) wiedergibt.

**8.** Verfahren nach mindestens einem der Ansprüche 1 bis 7, **dadurch gekennzeichnet, daß**

- die Zusammenhänge zwischen den Signalwerten (R, $G_L$, $G_T$, $G_M$) und den Istabmessungen der gravierten Probenäpfchen (30) annähernd linear sind und
- die Zusammenhänge durch Übertragungskoeffizienten (f; f') definiert sind.

**9.** Verfahren nach mindestens einem der Ansprüche 1 bis 8, **dadurch gekennzeichnet, daß** die für den ersten Ablauf d) bis g) eingestellten Signalwerte (R, $G_L$, $G_T$, $G_M$) Erfahrungswerte sind.

## Claims

**1.** Method of calibrating an engraving intensifier in an electronic engraving machine for engraving printing cylinders for intaglio printing in which

a) an engraving signal (G) for driving the engraving needle (4) of an engraving member (3) is obtained from engraving values (GD) representing desired tone values and a periodic vibration signal (R) for generating an engraving grid in an engraving intensifier (8) which can be set by signal values (R, $G_L$, $G_T$, $G_M$),
b) the engraving needle (4) engraves cells into the printing cylinder, the actual dimensions of which represent engraved actual tone values,
c) transmission functions (f) are determined which reproduce the interrelationships between changes, set in the engraving intensifier (8), in the signal values (R, $G_L$, $G_T$, $G_M$) and the changes in the actual dimensions of the cells resulting from this,
d) signal values (R, $G_L$, $G_T$, $G_M$) for changing at least one of the parameters "vibration", "light", "depth" or "medium tone" are set in the engraving intensifier (8),
e) with the signal values (R, $G_L$, $G_T$, $G_M$) test cells (30) are engraved for pre-set desired dimensions and their actual dimensions measured,
f) differential values ($\Delta R$, $\Delta G_L$, $\Delta G_T$, $\Delta G_M$) are determined from the actual dimensions and the desired dimensions of the test cells (30) taking into account the transmission functions (f),
g) the signal values (R, $G_L$, $G_T$, $G_M$) are corrected by adding the differential values ($\Delta R$, $\Delta G_L$, $\Delta G_T$, $\Delta G_M$) and
h) the cycles d) to g) are repeated with the corrected signal values (R, $G_L$, $G_T$, $G_M$) in each case until the actual dimensions of the test cells (30) are at least within a tolerance range around the desired dimensions, **characterised in that** to shorten calibration time
i) in each cycle d) to g) the actual dimensions of the test cells (30) are compared with the desired dimensions,
j) if the actual dimensions are outside the tolerance range the transmission functions (f) are newly calculated,
k) the differential values ($\Delta R$, $\Delta G_L$, $\Delta G_T$, $\Delta G_M$) are determined taking into account the newly calculated transmission functions (f') and
l) the signal values (R, $G_L$, $G_T$, $G_M$) are corrected with the new differential values ($\Delta R$, $\Delta G_L$, $\Delta G_T$, $\Delta G_M$).

2. Method according to Claim 1, **characterised in that** the calculation of the new transmission functions (f') is done in each case by working out the difference between the set signal values (R, $G_L$, $G_T$, $G_M$) and by working out the difference between the functionally associated actual dimensions of the test cells (30) of two successive cycles d) to g).

3. Method according to Claim 1 or 2, **characterised in that** the dimensions of a test cell (30) are the transverse diagonals ($d_Q$), the longitudinal diagonal ($d_L$) and optionally the through-cut ($d_K$).

4. Method according to at least one of Claims 1 to 3, **characterised in that** the differential value ($\Delta R$) of the vibration signal value (R) for the parameter "vibration" is determined from the difference between the actual dimensions ($d"_{QT}$, $d"_K$) and the desired values ($d'_{QT}$, $d'_K$) of a test cell (30) representing the tone value range "depth".

5. Method according to at least one of Claims 1 to 4, **characterised in that**

   - an imaginary transverse diagonal ($d^*_{QL}$) for a test cell (30) representing the tone value range "light" is calculated as the sum of the measured transverse diagonal ($d"_{QL}$) and a change in transverse diagonal ($\Delta d_{QL}(R)$) arising as a result of the change ($\Delta R$) in the vibration signal (R).
   - the deviation ($\Delta d_{QL}$) of the imaginary transverse diagonal ($d^*_{QL}$) from the desired transverse diagonal ($d'_{QL}$) is determined and
   - the differential value ($\Delta G_L$) of the engraving signal value $G_L$ for the parameter "light" is calculated from the established deviation ($\Delta d_{QL}$) and the transmission function [$f(G_L)$; $f'(G_L)$], which reproduces the interrelationship between a change in the engraving signal value ($G_L$) for the parameter "light" and the change in the transverse diagonal ($d_{QL}$) of a test cell (30) representing the tone value range "light" resulting from it.

6. Method according to at least one of Claims 1 to 5, **characterised in that**

   - an imaginary transverse diagonal ($d^*_{QT}$) for a test cell (30) representing the tone value range "depth" is calculated as the sum of the measured transverse diagonal ($d"_{QT}$) and a change in the transverse diagonal ($\Delta d_{QT}(R)$) arising as a result of the change ($\Delta R$) in the vibration signal (R),
   - the deviation ($\Delta d_{QT}$) of the imaginary transverse diagonal ($d^*_{QT}$) from the desired transverse diagonal ($d'_{QT}$) is determined and
   - the differential value ($\Delta G_T$) of the engraving signal value ($G_T$) for the parameter "depth" is calculated from the established deviation ($\Delta d_{QT}$) and the transmission function [$f(G_T)$; $f'(G_T)$], which reproduces the interrelationship between a change in the engraving signal value ($G_T$) for the parameter "depth" and the change in the transverse diagonal ($d_{QT}$) of a test cell (30) representing the tone value range "depth" resulting from it.

7. Method according to at least one of Claims 1 to 6, **characterised in that**

   - an imaginary transverse diagonal ($d^*_{QM}$) for a test cell (30) representing the tone value range "medium tone" is calculated as the sum of the measured transverse diagonal ($d"_{QM}$) and changes in the transverse diagonal ($\Delta d_{QM}(R)$; $\Delta d_{QM}(G_L)$; ($\Delta d_{QM}(G_T)$)) which arise as a result of the change ($\Delta R$) in the vibration signal (R),

   - the deviation ($\Delta d_{QM}$) of the imaginary transverse diagonal ($d^*_{QM}$) from the desired transverse diagonal ($d'_{QM}$) is determined and

   - the differential value ($\Delta G_M$) of the engraving signal value ($G_M$) for the parameter "medium tone" is calculated from the established deviation ($\Delta d_{QM}$) and the transmission function [$f(G_M)$; $f'(G_M)$], which reproduces the interrelationship between a change in the engraving signal value ($G_M$) for the parameter "medium tone" and the change in the transverse diagonal ($d_{QM}$) of a test cell (30) representing the tone value range "medium tone" resulting from it.

8. Method according to at least one of Claims 1 to 7, **characterised in that**

   - the interrelationships between the signal values (R, $G_L$, $G_T$, $G_M$) and the actual dimensions of the engraved test cells (30) are approximately linear and
   - the interrelationships are defined by transmission coefficients (f; f').

9. Method according to at least one of Claims 1 to 8, **characterised in that** the signal values (R, $G_L$, $G_T$, $G_M$) set for the first cycle d) to g) are experimental values.

**Revendications**

1. Procédé de calibrage d'un amplificateur de gravure d'une machine de gravure électronique pour graver des cylindres d'impression pour l'impression en taille douce, selon lequel :

a) à partir de valeurs de gravure (GD) représentant des valeurs de teinte de consigne et d'un signal de vibration périodique (R) pour générer une trame de gravure dans un amplificateur de gravure (8) réglable par les valeurs des signaux (R, $G_L$, $G_T$, $G_M$), on forme un signal de gravure (G) pour commander le ciseau de gravure (4) d'un organe de gravure (3),

b) le ciseau de gravure (4) grave des cuvettes dans le cylindre d'impression (1) dont les dimensions réelles représentent les valeurs réelles des teintes à graver,

c) on détermine des fonctions de transfert (f) représentant les relations entre les variations des valeurs de signal (R, $G_L$, $G_T$, $G_M$) à régler dans l'amplificateur de gravure (8) et les variations qui en résultent des dimensions réelles des cuvettes,

d) on règle des valeurs de signaux (R, $G_L$, $G_T$, $G_M$) pour modifier au moins un paramètre « vibration », « lumière », « profondeur » ou « teinte moyenne » sur l'amplificateur de gravure (8),

e) à l'aide des valeurs de signal (R, $G_L$, $G_T$, $G_M$), on grave des cuvettes d'essai (30) pour des dimensions de consigne et on mesure leurs dimensions réelles,

f) à partir des dimensions réelles et des dimensions de consigne d'une cuvette d'essai (30) et en tenant compte des fonctions de transfert (f), on détermine des valeurs de différence ($\Delta R$, $\Delta G_L$, $\Delta G_T$, $\Delta G_M$),

g) on corrige les valeurs des signaux (R, $G_L$, $G_T$, $G_M$) par addition des valeurs de différence ($\Delta R$, $\Delta G_L$, $\Delta G_T$, $\Delta G_M$), et

h) on répète les opérations d) jusqu'à g) chaque fois avec les valeurs de signaux corrigées (R, $G_L$, $G_T$, $G_M$) jusqu'à ce que les dimensions réelles des cuvettes (30) se situent au moins dans la plage de tolérances des dimensions de consigne,

**caractérisé en ce que**

pour réduire la durée de calibrage,

i) dans chacune des étapes d)-g), on compare les mesures réelles des cuvettes d'essai (30) aux mesures de consigne,

j) au cas où les dimensions réelles se situent en dehors de la plage de tolérances, on recalcule les fonctions de transfert (f),

k) on détermine les valeurs de différence ($\Delta R$, $\Delta G_L$, $\Delta G_T$, $\Delta G_M$) en tenant compte des nouvelles fonctions de transfert calculées (f') et,

l) on corrige les valeurs des signaux (R, $G_L$, $G_T$, $G_M$) avec les nouvelles valeurs de différence ($\Delta R$, $\Delta G_L$, $\Delta G_T$, $\Delta G_M$).

2. Procédé selon la revendication 1,
**caractérisé en ce que**
le calcul des nouvelles fonctions de transfert (f') se fait chaque fois en formant la différence entre les valeurs des signaux réglées (R, $G_L$, $G_T$, $G_M$) ainsi que la différence entre les dimensions réelles associées fonctionnellement aux cuvettes d'essai (30) pour deux opérations successives d)-g).

3. Procédé selon les revendications 1 et 2,
**caractérisé en ce que**
la mesure de dimension d'une cuvette d'essai (30) correspond aux diagonales transversales ($d_Q$), aux diagonales longitudinales ($d_L$) et le cas échéant à la profondeur ($d_K$).

4. Procédé selon au moins l'une des revendications 1 à 3,
**caractérisé en ce que**
l'on détermine la valeur de différence ($\Delta R$) de la valeur du signal de vibration (R) pour le paramètre « vibration » à partir de la différence entre les dimensions réelles ($d''_{QT}$, $d''_K$) et les dimensions de consigne ($d'_{QT}$, $d'_K$) d'une cuvette d'essai (30) représentant la plage de valeurs de teinte « profondeur ».

5. Procédé selon au moins l'une des revendications 1 à 4,

**caractérisé en ce que**

- on obtient une diagonale transversale fictive ($d^*_{QL}$) pour une cuvette d'essai (30) représentant la plage de valeurs de teinte « lumière » comme somme des diagonales transversales mesurées ($d''_{QL}$) et d'une variation des diagonales transversales ($\Delta d_{QL}(R)$) résultant de la variation ($\Delta R$) du signal de vibration (R),
- on détermine la déviation ($\Delta d_{QL}$) des diagonales transversales fictives ($d^*_{QL}$) par rapport aux diagonales transversales de consigne ($d'_{QL}$) et,
- on calcule la valeur de différence ($\Delta G_L$) de la valeur du signal de gravure ($G_L$) pour le paramètre « lumière» à partir de la déviation constatée ($\Delta d_{QL}$) et de la fonction de transfert [$f(G_L)$ ; $f'(G_L)$], représentant la relation entre une variation de la valeur du signal de gravure ($G_L$) du paramètre « lumière » et la variation qui en résulte des diagonales transversales ($d_{QL}$) d'une cuvette d'essai (30) représentant la plage de valeurs de teinte « lumière ».

6. Procédé selon au moins l'une des revendications 1 à 5,
   **caractérisé en ce que**

   - une diagonale transversale fictive ($d^*_{QT}$) d'une cuvette d'essai (30) représentant la plage de valeurs de teinte « profondeur » et la somme des diagonales transversales mesurées ($d''_{QT}$) et d'une variation de diagonales transversales ($\Delta d_{QT}(R)$) résultant de la variation ($\Delta R$) du signal de vibration (R),
   - on détermine la déviation ($\Delta d_{QT}$) des diagonales transversales fictives ($d^*_{QT}$) par rapport aux diagonales transversales de consigne ($d'_{QT}$) et,
   - on calcule la valeur de différence ($\Delta G_T$) de la valeur du signal de gravure ($G_T$) pour le paramètre « profondeur » à partir de la déviation constatée ($\Delta d_{QT}$) et de la fonction de transfert [$f(G_T)$ ; $f'(G_T)$] représentant la relation entre une variation de la valeur du signal de gravure ($G_T$) pour le paramètre « profondeur » et la variation qui en résulte des diagonales transversales ($d_{QT}$) d'une cuvette d'essai (30) représentant la plage de valeurs de teinte « profondeur ».

7. Procédé selon au moins l'une des revendications 1 à 6,
   **caractérisé en ce qu'**

   - on obtient une diagonale transversale fictive ($d^*_{QM}$) pour une cuvette d'essai (30) représentant la plage de valeurs de teinte « teinte moyenne » comme somme des diagonales transversales mesurées ($d''_{QM}$) et des variations de diagonales transversales ($\Delta d_{QM}(R)$ ; $\Delta d_{QM}(G_L)$; $\Delta d_{QM}(G_T)$), résultant de la variation ($\Delta R$) du signal de vibration (R),
   - on détermine la déviation ($\Delta d_{QM}$) des diagonales transversales fictives ($d^*_{QM}$) par rapport aux diagonales transversales de consigne ($d'_{QM}$) et,
   - on calcule la valeur de différence ($\Delta G_M$) de la valeur du signal de gravure ($G_M$) pour le paramètre « teinte moyenne » à partir de la déviation constatée ($\Delta d_{QM}$) et de la fonction de transfert [$f(G_M)$ $f'(G_M)$], représentant la relation entre la variation de la valeur du signal de gravure ($G_M$) pour le paramètre « teinte moyenne » et la variation qui en résulte des diagonales transversales ($d_{QM}$) d'une cuvette d'essai (30) représentant la plage de valeurs de teinte « teinte moyenne ».

8. Procédé selon au moins l'une des revendications 1 à 7,
   **caractérisé en ce que**

   - les relations entre les valeurs des signaux (R, $G_L$, $G_T$, $G_M$) et les dimensions réelles des cuvettes d'essai à graver (30) sont sensiblement linéaires et,
   - les relations sont définies par des coefficients de transfert (f ;f').

9. Procédé selon au moins l'une des revendications 1 à 8,
   **caractérisé en ce que**
   les valeurs de signaux (R, $G_L$, $G_T$, $G_M$) prises pour les premières étapes d)-g) sont des valeurs résultant de l'expérience.